# EUROPÄISCHE PATENTSCHRIFT

(11) **EP 0 447 881 B1**
(45) Veröffentlichungstag und Bekanntmachung des Hinweises auf die Patenterteilung: **07.07.1993**
(21) Anmeldenummer: 91103415.5
(22) Anmeldetag: 06.03.1991
(51) Int. Cl.: B25J 19/00

(54) **Industrieroboter**
Industrial robot
Robot industriel

(30) Priorität: 21.03.1990 DE 4009136
(43) Veröffentlichungstag der Anmeldung: 25.09.1991
(73) Patentinhaber: SIEMENS AKTIENGESELLSCHAFT, 80333 München (DE)
(72) Erfinder: Weule, Roland, Dipl.-Ing., W-8500 Nürnberg (DE)

(56) Entgegenhaltungen:
- EP-A- 0 203 202
- US-A- 4 698 568
- US-A- 4 802 502
- ENERGY & AUTOMATION (SIEMENS) Bd 12, Nr.03, Juni01990, BERLIN DE, Seite023 ; HOLZL "Manutec R15- Now with explosion protection".

## Beschreibung

Die Erfindung bezieht sich auf einen Industrieroboter mit mehreren Achsen in der Schutzart "Überdruckkapselung" für explosionsgefährdete Bereiche und selbsttätiger Abschaltung bei gemessenem unzulässigen Druckabfall im Roboter.

Hierbei wird von Konstruktionen ausgegangen, wie sie beispielsweise aus der EP-A-0 187 865 bekannt sind.

Um das Eindringen explosiver Gase in den Roboter zu verhindern, ist es bekannt, im abgedichteten Robotergehäuse einen Luftüberdruck zu erzeugen. Damit wird verhindert, daß explosive Gase zu elektrischen Elementen im Roboter vordringen können, von denen Funken ausgehen, wie z.B. Antriebsmotoren für die Achsen. Bei einer dieser bekannten Anordnungen (vgl. z.B. EP-A-0 203 202) liegt der Druck-gasanschluß im Sockel. Die Druckluft kann über einen im Roboterinnenraum mündenden Schlauch zum Sockel zurückströmen und hier ausgelassen werden. Hierdurch wird der Innenraum durchspült, sofern der Schlauch in Ordnung ist.

Zur Drucküberwachung ist es bekannt, innerhalb des abgedichteten Robotergehäuses Drucksensoren vorzusehen, die einen unzulässigen Abfall des Überdruckes melden und die Anlage stillsetzen.

Bei den bekannten Anordnungen muß häufig der Druck an verschiedenen Stellen überwacht werden, da es keinen Meßpunkt gibt, an dem eine definierte Aussage über einen ausreichenden Überdruck im Gesamtsystem ableitbar ist. Ferner dürfte es bei den bekannten Konstruktionen unter bestimmten Umständen schwierig sein, im Stillstand eingedrungenes explosives Gas wieder zu entfernen.

Die Aufgabe der vorliegenden Erfindung besteht darin, den Explosionsschutz bei einem Roboter so auszubilden, daß eine einwandfreie Durchspülung des Innenraumes vor Arbeitsbeginn gesichert und eine einfache und zuverlässige Druckmessung möglich ist.

Diese Aufgabe wird erfindungsgemäß durch folgende Merkmale gelöst:
a) von einem im Sockel der Grundachse vorgesehenen Druckgasanschluß geht mindestens eine im Roboterinneren liegende Hauptversorgungsleitung ab, die im Bereich der letzten Achse mündet,
b) es sind von der Hauptversorgungsleitung abzweigende Hilfsleitungen vorgesehen,
c) in den Innenraum des Roboters austretendes Gas ist innerhalb des die Kapslung bildenden Robotergehäuses zum Sockel rückführbar und hier definiert auslaßbar,
d) im Robotersockel ist ein Druckwächtergerät vorgesehen, welches den Roboter bei unzulässigem Druckabfall abschaltet und
e) am Durckgasanschluß ist ein Steuerventil vorgesehen, mit dem von der Betriebsart "Spülen" in die Betriebsart "Ausgleich der Leckverluste" umschaltbar ist.

Der Spülvorgang wird dabei so durchgeführt, daß das Steuerventil in der Betriebsart "Spülen" einen vollen Zufluß von Druckluft gestattet, die den Innenraum durchspült. In der Betriebsart "Ausgleich" der Leckverluste kann nur soviel Gas nachströmen, als nötig ist, um etwaige definierte Leckverluste auszugleichen. Damit ist gesichert, daß ein unzulässiger Druckabfall an irgendeiner Stelle des Roboters sofort über die Meßstelle im Sockel erfaßt werden kann.

Durch die Verwendungvon zusätzlichen, von der Hauptversorgungsleitung abzweigenden Hilfsspülleitungen kann erreicht werden, daß alle Räume im Inneren des Roboters mit Gas durchspült werden.

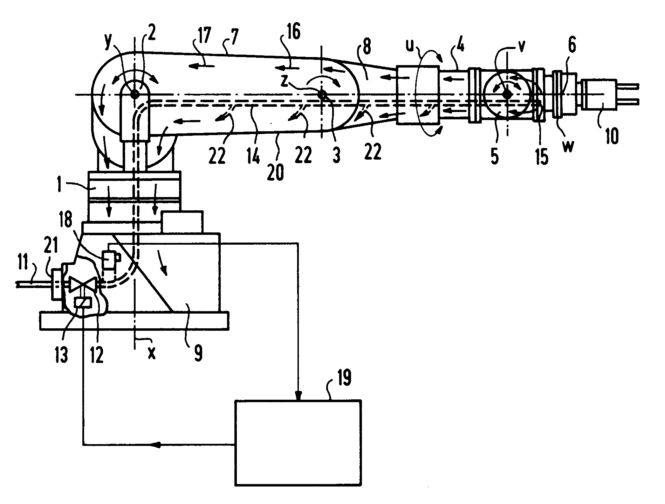

Anhand eines in der Zeichnung dargestellten Ausführungsbeispiels sei die Erfindung näher erläutert:
Bei dem in der Zeichnung schematisch in der Seitenansicht dargestellten Industrie-Gelenkroboter sitzt auf einem Ständersockel 9 das Gelenk 1, durch das eine Drehung um die X-Achse möglich ist. Mit diesem Gelenk 1 ist ein Gelenk 2 verschraubt, durch das eine Drehung um die Y-Achse möglich ist. An diesem Gelenk 2 ist seitlich der Oberarm 7 befestigt, der am anderen Ende das Gelenk 3 trägt, durch das eine Drehung um die Z-Achse möglich ist. Am Gelenk 3 ist der parallel zum Oberarm 7 geführte Vorderarm 8 befestigt. An diesen Vorderarm schließen sich drei Gelenke 4, 5, 6 an, die zur Drehung in den Achsen u, v. w dienen. Am Gelenk 6 ist der eigentliche Greifer 10 (Hand) befestigbar.

Im Inneren des Gehäuses 20 dieses schematisch dargestellten Gelenkroboters finden sich die zur Bewegung in den einzelnen Achsen notwendigen elektrischen Antriebsmotoren sowie zugehörige Versorgungsleitungen und weitere Konstruktionsbauteile.

Eine Druckluftzuleitung 11 ist mit einem Druckluftanschluß 21 im Sockel 9 verbunden. An diesen Druckluftanschluß 21 schließt sich ein Steuerventil 12 an, das mit einer Spule 13 steuerbar ist. An dieses Steuerventil 12 ist über ein Druckwächtergerät 18 eine Hauptversorgungsleitung 14 angeschlossen, die sich im Inneren des Robotergehäuses 20 bis etwa in den Bereich der Achse 6 erstreckt und hier mündet. Dieser Mündungsbereich ist mit 15 bezeichnet. Von hier aus strömt die Luft im Innenraum innerhalb des die Kapselung bildeten Robotergehäuses 20 über die Achsen 5, 4, 3, 2 und 1 in den Robotersockel 9 zurück und hier über definierte Öffnungen im Druckwächtergerät nach Außen. Mit dem im Robotersockel 9 vorgesehenen Druckwächtergerät 18 kann der Druck innerhalb des Robotergehäuses 20 erfaßt werden kann. Zusätzlich zur genannten Hauptversorungsleitung sind noch Hilfsspülleitungen 22 vorgesehen, die von der Hauptversorgungsleitung 14 ausgehen und zu versteckten Enden und Winkeln innerhalb des Robotergehäuses führen. Die Hauptversorgungsleitung 14 kann auch aus einem System von parallelen Leitungen bestehen.

Die Betriebsweise ist folgende:
Während der Spülphase wird innerhalb einer vorgegebenen Zeit von z.B. fünf Minuten eine Spülluftmenge eingeblasen, die das Mehrfache des Eigenvolumens des Roboterinnenraums beträgt. Dieses Spülmedium wird in dem, entlang der inneren Kabelstränge gefühten, den gesamten Geräteinnenraum durchziehenden Schlauchleitungssystem 14, 22 zu sämtlichen innerhalb der Kapselung befindlichen elektrischen Bauelementen geleitet. Wie bemerkt, endet die Hauptversorgungsleitung 14 im Gehäuse der Achse 5. Das dort in den Innenraum austretende Spülgas wird so geführt, daß der gesamte Innenraum des Roboters von der Achse 6 über die Gehäuse der Achsen 5, 4, 3, 2 und 1 bis zum Robotersockel 9 in Richtung des Pfeiles 17 vom Rückstrom 16 durchspült und somit gereinigt wird.

Nach Ablauf dieser Spülphase wird vom Steuergerät 19 die Versorgungsspannung für die Spule 13 des Steuerventils 12 freigegeben. Damit wird von der Betriebsart "Spülen" auf die Betriebsart "Ausgleich der Leckverluste" umgestellt. Der Roboter ist somit für den Einsatz betriebsbereit. Der Innendruck wird in dieser Betriebsart ständig vom Druckwächtergerät 18 erfaßt und an das Steuergerät 19 gemeldet. Unterschreitet der Überdruck ein vorgegebenes Maß, z.B. 2 Millibar gegenüber der Umgebungsluft, so wird die Anlage stillgesetzt. Zusätzlich zum Druck kann das Druckwächtergerät auch die Differenz zwischen einströmender und ausströmender Luftmenge erfassen, deren Größe ebenfalls als Störsignal ausgenutzt werden kann.

## Patentansprüche

1. Industrieroboter mit mehreren Achsen in der Schutzart Überdruckkapselung für explosionsgefährdete Bereiche mit folgenden Merkmalen:
a) von einem im Sockel (9) der Grundachse (1) vorgesehenen Druckgasanschluß (21) geht mindestens eine im Roboterinneren liegende Hauptversorgungsleitung (14) ab, die im Bereich der letzten Achse (6) mündet,
b) es sind von der Hauptversorgungsleitung abzweigende Hilfsleitungen (22) vorgesehen,
c) in den Innenraum des Roboters austretendes Gas (16) ist innerhalb des die Kapslung bildenden Robotergehäuses (20) zum Sockel (9) rückführbar und hier definiert auslaßbar,
d) im Robotersockel ist ein Druckwächtergerät (18) vorgesehen, welches den Roboter bei unzulässigem Druckabfall abschaltet und
e) am Druckgasanschluß (21) ist ein Steuerventil (12) vorgesehen, mit dem von der Betriebsart "Spülen" in die Betriebsart "Ausgleich der Leckverluste" umschaltbar ist.

2. Industrieroboter nach Anspruch 1, **gekennzeichnet durch** ein Druckwächtergerät (18) zum Erfassen des Druckes und zim Vergleich von zuströmender und ausströmen- der Gasmenge.

## Claims

1. Industrial robot having several axes in a protective pressurised enclosure for areas subject to explosion hazards, having the following features:
a) at least one main supply line (14) runs from a compressed-gas connection (21) provided in the base (9) of the base axis (1), which supply line lies inside the robot and discharges in the region of the end axis (6);
b) auxiliary lines (22) are provided branching off from the main supply line;
c) gas (16) penetrating into the interior space of the robot can be guided back inside the robot housing (20) forming the enclosure, into the base (9) and can be let out here in a defined manner;
d) provided in the robot base there is a pressure-control device (18) which switches off the robot when there is an impermissible drop in pressure; and
e) there is provided at the compressed-gas connection (21) a control valve (12) with which it is possible to switch over from the operating mode "flushing" to the operating mode "compensation of the leakage losses".

2. Industrial robot according to claim 1, characterised by a pressure-control device (18) for detecting the pressure and for comparing incoming and outgoing quantities of gas.

## Revendications

1. Robot industriel comportant plusieurs axes, réalisé conformément au type dit à protection à capot contre une surpression pour des domaines présentant un risque d'explosion, possédant les caractéristiques suivantes :
a) au moins une conduite d'alimentation principale (14), qui est située à l'intérieur du robot et qui débouche au voisinage du dernier axe (6), en s'étendant à partir d'un raccord à gaz comprimé (21), prévu dans le socle (9) de l'axe de base (1),
b) il est prévu des conduites auxiliaires (22) issues de la conduite d'alimentation principale,
c) le gaz (16), qui sort dans l'espace intérieur du robot, peut être renvoyé à l'intérieur du carter (20) du robot, qui forme le capot, dans le socle (9) et peut y être évacué de façon définie,
d) dans le socle du robot il est prévu un appareil (28) de contrôle de la pression, qui débranche le robot dans le cas d'une chute de pression indadmissible, et
e) sur le raccord à gaz comprimé (21) il est prévu une vanne de commande (12), à l'aide de laquelle on peut réaliser une commutation du type de fonctionnement "balayage" au type de fonctionnement "compensation des fuites".

2. Robot industriel suivant la revendication 1, caractérisé par un appareil (18) de contrôle de la pression servant à détecter la pression et à comparer la quantité de gaz affluente et la quantité de gaz effluente.
